(19) Europäisches Patentamt
European Patent Office
Office européen des brevets

(11) **EP 4 635 709 A1**

(12) **EUROPEAN PATENT APPLICATION**
published in accordance with Art. 153(4) EPC

(43) Date of publication:
**22.10.2025 Bulletin 2025/43**

(21) Application number: **23903153.7**

(22) Date of filing: **08.11.2023**

(51) International Patent Classification (IPC):
**B29C 45/17** *(2006.01)*      **B29C 45/76** *(2006.01)*

(52) Cooperative Patent Classification (CPC):
**B29C 45/17; B29C 45/76**

(86) International application number:
**PCT/JP2023/040165**

(87) International publication number:
**WO 2024/127855 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.12.2022  JP 2022199385**

(71) Applicant: **The Japan Steel Works, Ltd.
Tokyo 141-0032 (JP)**

(72) Inventor: **KOSUE, Shogo
Tokyo 141-0032 (JP)**

(74) Representative: **Simmons & Simmons LLP
(Munich)
Lehel Carré
Gewürzmühlstraße 11
80538 Munich (DE)**

(54) **INJECTION MOLDING MACHINE**

(57)     This injection molding machine comprises: a ball screw (37) including a screw shaft (39), balls, and a nut (38); a grease supply mechanism (200) which supplies a grease to the ball screw (37); and a control device (14) which controls the grease supply mechanism (200). The control device (140) is configured to cause the grease supply mechanism (200) to perform a normal oil supply for supplying a first amount of grease to the nut (38) and a cleaning oil supply for supplying a second amount of grease to the nut (38), the second amount being greater than the first amount. Accordingly, there is provided an injection molding machine capable of extending the service life of a ball screw while reducing the efforts of maintainers.

FIG.3

EP 4 635 709 A1

**Description**

TECHNICAL FIELD

The present disclosure relates to an injection molding machine.

BACKGROUND ART

An injection molding machine includes an injection apparatus that melts and injects a molding material and a clamping apparatus. The injection apparatus includes a heating cylinder provided with a nozzle at a tip end and a screw arranged within the heating cylinder as being rotatable in a circumferential direction and an axial direction. The screw is driven by a drive mechanism in a rotational direction and the axial direction. A screw drive mechanism includes a ball screw that converts rotational driving force of an injection servo motor into driving force in the axial direction of the screw and transmits the driving force.

For example, Japanese Patent Laying-Open No. 2021-74917 (PTL 1) discloses an injection molding machine including a ball screw.

CITATION LIST

PATENT LITERATURE

PTL 1: Japanese Patent Laying-Open No. 2021-74917

SUMMARY OF INVENTION

TECHNICAL PROBLEM

A typical wear model of a ball screw is that a foreign matter is bitten in the ball screw, a small flaw occurs in a ball rolling contact surface of a screw shaft or a nut, the rolling contact surface peels off starting from the flaw as the ball runs over the same, a new flaw further occurs as a result of pressing of such a portion by the ball, and wear proceeds at an accelerated rate.

When a concentration of iron particles in grease, which serves as a guideline of wear, increases, an attempt to extend a lifetime of the ball screw may be made by manually supplying grease to push out such a foreign matter as iron particles.

Conventionally, however, a serviceperson has had to regularly measure the concentration of iron particles and to supply grease as necessary.

The present disclosure was made to solve such a problem, and an object thereof is to provide an injection molding machine capable of achieving a longer lifetime of a ball screw while labor by a serviceperson is lessened.

SOLUTION TO PROBLEM

An injection molding machine according to one embodiment includes a ball screw including a screw shaft, a ball, and a nut, a grease supply mechanism that supplies grease to the ball screw, and a control device that controls the grease supply mechanism. The control device is configured to have the grease supply mechanism perform ordinary grease supply in which a first amount of grease is supplied to the nut and cleaning grease supply in which a second amount of grease is supplied to the nut, the second amount being larger than the first amount.

ADVANTAGEOUS EFFECTS OF INVENTION

According to the injection molding machine according to the present disclosure, the lifetime of the ball screw included in the injection molding machine can be extended without increase in time and efforts by a serviceperson.

BRIEF DESCRIPTION OF DRAWINGS

Fig. 1 is a diagram for illustrating a configuration of an injection molding machine 100.
Fig. 2 is a diagram showing a detailed configuration of an actuation apparatus 124 in Fig. 1.
Fig. 3 is a block diagram showing a configuration of a ball screw and a grease supply mechanism.
Fig. 4 is a first illustrative diagram showing an FFT signal intensity indicating a state of a ball screw 37 and a normal state determination method.
Fig. 5 is a second illustrative diagram showing the FFT signal intensity indicating a state of ball screw 37 and the normal state determination method.
Fig. 6 is an illustrative diagram showing a deterioration model of ball screw 37 and a method of prediction of a lifetime thereof.
Fig. 7 is a flowchart for illustrating control of supply of grease in ordinary grease supply.
Fig. 8 is a flowchart for illustrating control of supply of grease in cleaning grease supply.
Fig. 9 is a diagram showing a configuration of a grease supply mechanism included in a second embodiment.
Fig. 10 is a flowchart for illustrating control of supply of grease in cleaning grease supply in the second embodiment.
Fig. 11 is a diagram showing a configuration of a grease supply mechanism included in a third embodiment.

DESCRIPTION OF EMBODIMENTS

An embodiment of the present disclosure will be described in detail below with reference to the drawings. The same or corresponding elements in the drawings have the same reference characters allotted and description thereof will not be repeated.

[First Embodiment]

<Configuration of Injection Molding Machine>

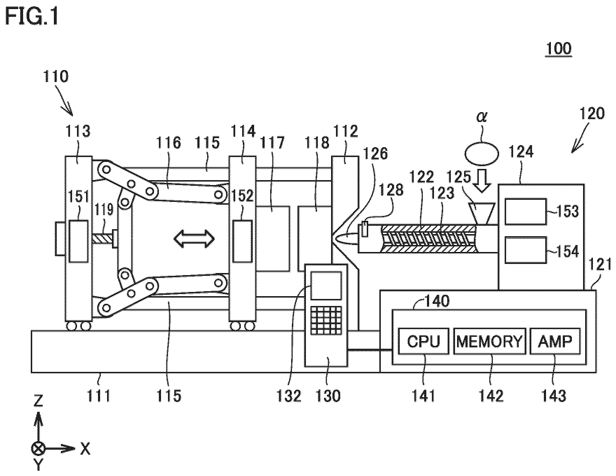

Fig. 1 is a diagram for illustrating a configuration of an injection molding machine 100. For the sake of convenience of description, in Fig. 1, a floor surface where injection molding machine 100 is arranged is defined as an XY plane and a direction perpendicular to the floor surface is defined as a Z-axis direction. A positive direction along a Z axis may be referred to as an upper surface side or upward and a negative direction may be referred to as a lower surface side or below. Though injection molding machine 100 is shown as a lateral injection molding machine, it is not limited to the lateral injection molding machine but may be a vertical injection molding machine.

Injection molding machine 100 includes a clamping apparatus 110 that clamps molds, an injection apparatus 120 that melts and injects an injection material, a control panel 130, and a control device 140.

Clamping apparatus 110 includes a bed 111, a fixed platen 112, a clamping housing 113, a movable platen 114, a tie bar 115, a clamping mechanism 116, molds 117 and 118, and a ball screw 119.

Clamping housing 113 and movable platen 114 are coupled to each other by clamping mechanism 116. Clamping mechanism 116 is provided with a toggle mechanism. Ball screw 119 is coupled to the toggle mechanism, and movable platen 114 can be moved relatively to clamping housing 113 in an X-axis direction as a servo motor 151 arranged in clamping housing 113 is driven to rotate ball screw 119.

Mold 117 and mold 118 are arranged as being opposed to each other between movable platen 114 and fixed platen 112. As clamping mechanism 116 is used to move mold 117 in the X-axis direction, mold 117 and mold 118 can be brought in intimate contact with each other or mold 117 can be moved away from mold 118.

A product (molded article) in a desired shape can be molded by filling the molds with a molten material (resin) and solidifying the molten material by cooling while mold 117 and mold 118 are in intimate contact with each other. After the product is molded, by activating an ejection mechanism (not shown) arranged in movable platen 114 while mold 117 is away from mold 118, the molded product can be taken out of mold 117. The ejection mechanism is driven by a servo motor 152 arranged in movable platen 114.

Injection apparatus 120 includes a base 121, a heating cylinder 122, an actuation apparatus 124, a hopper 125, and a temperature sensor 128.

Heating cylinder 122 that extends in the X-axis direction is arranged in actuation apparatus 124. Heating cylinder 122 includes a heater (not shown) for heating the inside, a screw 123, and an injection nozzle 126. Screw 123 is configured as being rotatable by a plasticization motor 154 in actuation apparatus 124, with the X-axis direction being defined as a rotation axis. Screw 123 is configured to be moved in the X-axis direction by an injection motor 153. A resin material $\alpha$ in a form of beads is introduced in hopper 125. Heating cylinder 122 produces a molten material by heating and melting resin material $\alpha$ and mixing and kneading the resin material with screw 123.

As actuation apparatus 124 moves screw 123 in the X-axis direction, injection molding machine 100 brings injection nozzle 126 into contact with a sprue bush of mold 118 in clamping apparatus 110. Injection molding machine 100 then injects the molten material from injection nozzle 126 to fill a cavity in molds 117 and 118 with the molten material. Plasticization motor 154 moves screw 123 in heating cylinder 122 in a negative direction along an X axis to apply a pressure to the molten material, to thereby inject the molten material into molds 117 and 118 and to maintain the pressure of the injected molten material constant.

Control device 140 controls the heater based on a detection value from temperature sensor 128 to adjust a temperature of the molten material to a desired temperature.

Injection molding machine 100 is capable of successively form products by cyclically and repeatedly performing a clamping step, an injection step, a pressure holding step, a plasticization step, a mold opening step, and an ejection step.

Control device 140 is stored in base 121. Control device 140 includes a CPU 141, a memory 142, and a servo amplifier 143 for driving each motor. Control device 140 obtains detection values from various sensors arranged in injection molding machine 100 and controls injection molding machine 100 in a centralized manner.

Control panel 130 includes a display 132 where various images are shown and an input device such as a keyboard. Control panel 130 is connected to control device 140 and can obtain a state of injection molding machine 100 for display or can output a user operation signal from the input device to control device 140.

<Configuration of Actuation Apparatus>

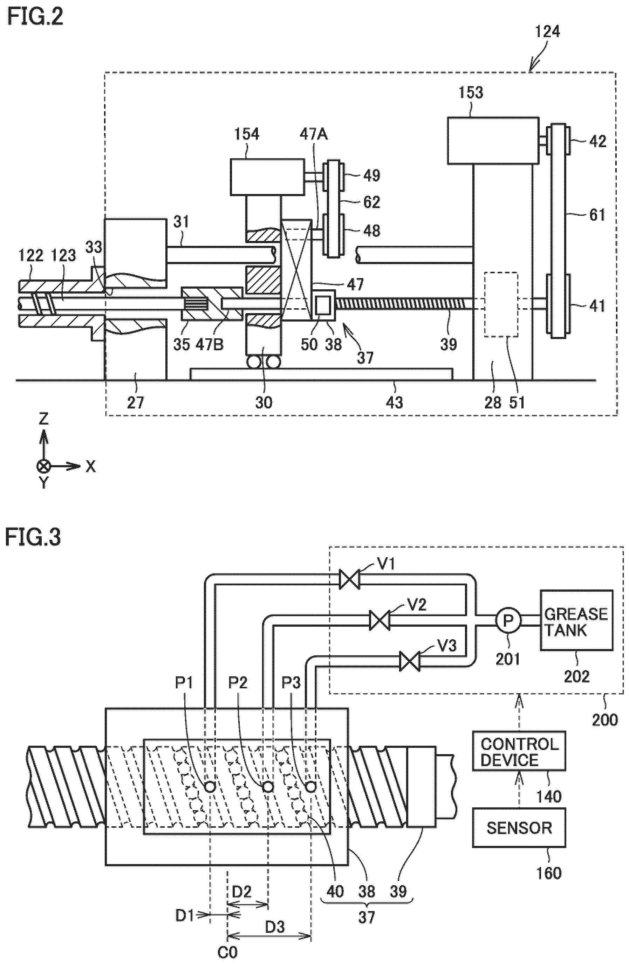

Fig. 2 is a diagram showing a detailed configuration of actuation apparatus 124 in Fig. 1. Though Fig. 2 is mainly referred to in the description of actuation apparatus 124 below, Fig. 1 is also referred to as appropriate. Fig. 2 shows a part of heating cylinder 122 and a part of screw 123.

Actuation apparatus 124 includes a fixed plate 27, an end plate 28, a linear guide 43, and a movable plate 30. Plasticization motor 154 is arranged in movable plate 30. Injection motor 153 is arranged in end plate 28.

Fixed plate 27 and end plate 28 are coupled to each other by a guide bar 31. Linear guide 43 guides movable plate 30 in the X-axis direction. Movable plate 30 is guided by guide bar 31 to be moved in the X-axis direction.

Fixed plate 27 is provided with a hole 33, and a rear end of heating cylinder 122 is fixed such that this hole 33 and a hole in heating cylinder 122 are aligned. A rear end of screw 123 passes through hole 33 and is fixed to a rotational driveshaft 35. Rotational driveshaft 35 is coupled to an output shaft 47B of a reduction gear 47.

Actuation apparatus 124 further includes a ball screw 37 including a ball screw shaft 39, a ball screw nut 38, and a ball, a first bearing 51, a first timing belt 61, linear guide 43, and a vibration sensor 50. First bearing 51 is accommodated in end plate 28. First bearing 51 rotatably supports a part of ball screw shaft 39.

Ball screw nut 38 is fixed to movable plate 30 with reduction gear 47 being interposed. Ball screw nut 38 is attached to ball screw shaft 39. Ball screw shaft 39 of ball screw 37 passes through end plate 28 and has a tip end projecting from end plate 28. A first pulley 41 is provided at this projecting portion. A second pulley 42 is provided at a rotation shaft of injection motor 153, and first timing belt 61 is wound around first pulley 41 and second pulley 42.

Therefore, as injection motor 153 is driven under the control by control device 140, motive power from injection motor 153 is transmitted to ball screw shaft 39 by first timing belt 61. As ball screw shaft 39 is rotated by motive power, ball screw nut 38 moves in the X-axis direction and movable plate 30 and screw 123 also move in the X-axis direction. As injection motor 153 is driven under the control by control device 140 as above, screw 123 moves in the X-axis direction.

Actuation apparatus 124 further includes reduction gear 47 and a second timing belt 62. Reduction gear 47 reduces a speed of rotation of a rotation shaft of plasticization motor 154. A third pulley 48 is provided at an input shaft 47A of reduction gear 47. A fourth pulley 49 is provided at a rotation shaft of plasticization motor 154. Second timing belt 62 is wound around third pulley 48 and fourth pulley 49. Therefore, as plasticization motor 154 is driven under the control by control device 140, screw 123 rotates.

Vibration sensor 50 is set in ball screw nut 38. For example, an acceleration sensor is employed as vibration sensor 50.

<Configuration of Ball Screw and Grease Supply Mechanism>

Fig. 3 is a block diagram showing a configuration of the ball screw and a grease supply mechanism. The injection molding machine includes ball screw 37 including screw shaft 39, a ball 40, and nut 38, a grease supply mechanism 200 that supplies grease to ball screw 37, and control device 140 that controls grease supply mechanism 200.

Ball screw nut 38 includes injection ports P1 to P3 through which grease is injected. Grease supply mechanism 200 includes a grease tank 202 where grease is stored, a delivery pump 201 that delivers grease, an on-off valve V1 provided in a pipe through which injection port P1 and delivery pump 201 are connected to each other, an on-off valve V2 provided in a pipe through which injection port P2 and delivery pump 201 are connected to each other, and an on-off valve V3 provided in a pipe through which injection port P3 and delivery pump 201 are connected to each other.

As shown in Fig. 3, the injection molding machine further includes a sensor 160 that detects a physical value indicating a state of ball screw 37. Control device 140 is configured to determine timing of cleaning grease supply based on output from sensor 160. Sensor 160 detects as the physical value, at least any one of vibration of screw shaft 39, torque of the servo motor that rotates screw shaft 39, a pressure of injection by the injection molding machine, and a concentration of iron particles in grease discharged from nut 38.

Nut 38 of the injection molding machine includes a first injection port P1, a second injection port P2, and a third injection port P3 through which grease is injected. Control device 140 is configured to control grease supply mechanism 200 to inject grease through both of first injection port P1 and second injection port P2 and the third injection port during ordinary grease supply and to inject grease only through first injection port P1 during cleaning grease supply.

Control device 140 is configured to have grease supply mechanism 200 perform ordinary grease supply in which a first amount of grease is supplied to nut 38 and cleaning grease supply in which a second amount of grease is supplied to nut 38, the second amount being larger than the first amount.

In the present embodiment, when control device 140 recognizes the detection value from sensor 160 as being out of a normal range, it performs cleaning grease supply in which grease in an amount larger than in ordinary grease supply is supplied to wash away iron particles and foreign matters in ball screw nut 38. By doing so, start of actual wear of the ball screw is detected and cleaning grease supply is automatically performed at appropriate timing, so that labor by a serviceperson can be lessened.

By supplying grease only while ball screw shaft 39 is moving during molding operations by the injection molding machine, foreign matters can effectively be washed away without interference with production. An amount of grease to be supplied may experimentally be determined in advance.

There are a plurality of grease injection ports, and grease is supplied through the plurality of injection ports P1 to P3 in ordinary grease supply. In cleaning grease supply operations, on the other hand, grease is supplied only through injection port P1 among the injection ports, which is closest to a center C0 of a nut main body, such that grease readily flows outward.

A distance D1 between a central position C0 of nut 38 and first injection port P1 in a direction along the rotation axis of screw shaft 39 is shorter than a distance D2 between central position C0 and second injection port P2 and a distance D3 between central position C0 and third injection port P3.

As grease is injected through the plurality of injection ports, flows of grease collide against one another, which interferes with discharge of iron particles. By using only one injection port around the center, however, iron particles and foreign matters can efficiently be washed away. The number of injection ports may be decreased; a single grease injection port may be provided around center C0 of the nut main body and grease may be injected therethrough.

<Determination of Timing of Cleaning Grease Supply>

Exemplary determination of timing of cleaning grease supply will be described in succession. In the description of determination of timing of cleaning grease supply below, Fig. 1 is also referred to as appropriate. By way of example, control device 140 monitors with vibration sensor 50, a vibration acceleration produced in ball screw 37. Control device 140 has obtained vibration acceleration data and time data stored in memory 142 in correspondence with each other, the time data indicating time of obtainment of the vibration acceleration data. Control device 140 then subjects the vibration acceleration data and the time data stored in memory 142 to fast Fourier transform. As a result of fast Fourier transform, a frequency component of the vibration acceleration data is obtained. Magnitude of the frequency component is called a fast Fourier transform (FFT) signal intensity below.

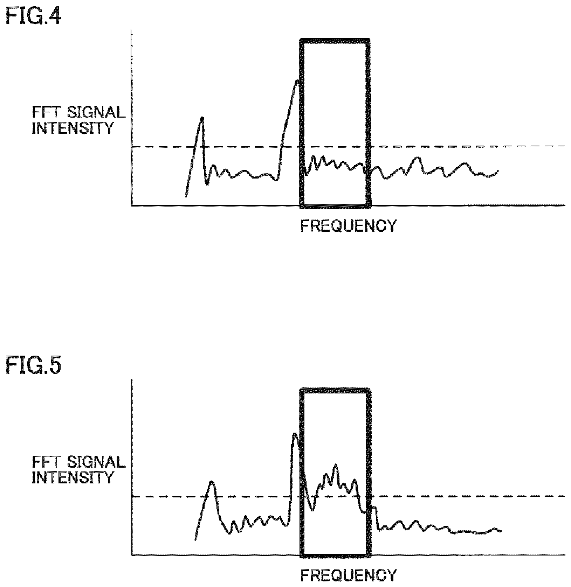

Fig. 4 is a first illustrative diagram showing an FFT signal intensity indicating a state of ball screw 37 and a normal state determination method. Fig. 5 is a second illustrative diagram showing the FFT signal intensity indicating a state of ball screw 37 and the normal state determination method. The abscissa of a graph shown in Figs. 4 and 5 represents a frequency and the ordinate represents the FFT signal intensity. Fig. 4 shows the FFT signal intensity obtained from normal ball screw 37. Fig. 5 shows the FFT signal intensity obtained from ball screw 37 which is not normal. In other words, Fig. 5 shows the FFT signal intensity obtained on the occurrence of an event which becomes a cause of progress of wear of ball screw 37 at the accelerated rate.

When nut 38 is flawed, a value of the FFT signal intensity in a specific frequency band indicated with a rectangular frame in Figs. 4 and 5 generally increases. In Figs. 4 and 5, a dashed line represents a threshold value for determination as to whether ball screw 37 is normal or abnormal. The specific frequency band and the threshold value can experimentally be obtained with the use of normal ball screw 37. The specific frequency band and the threshold value are stored in memory 142.

Control device 140 determines whether or not ball screw 37 is normal by comparing the FFT signal intensity in the specific frequency band with the threshold value. When an average value of the FFT signal intensities in the specific frequency band is smaller than the threshold value, control device 140 determines ball screw 37 as being normal. When the average value of the FFT signal intensities in the specific frequency band is equal to or larger than the threshold value, control device 140 determines ball screw 37 as not being normal.

When control device 140 makes determination as not being normal in primary determination above, it makes secondary determination. The vibration acceleration data to be used in secondary determination is vibration acceleration data accumulated after a time point of determination as not being normal in the primary determination.

Control device 140 calculates a deterioration model for estimating change of a state indicator which correlates with the lifetime of ball screw 37, based on the state indicator based on the vibration acceleration data and the time data stored in memory 142. The deterioration model is a function indicating relation between a time period of use and the state indicator. The deterioration model can be obtained by maximum likelihood estimation.

A function relating to the deterioration model is expressed, for example, in an expression (1) below.

$$P = a \times e^{bt} + c \quad \ldots (1)$$

P represents the state indicator, t represents the time period of use, and a, b, and c represent coefficients.

Control device 140 obtains the deterioration model by calculating coefficients a, b, and c that minimize the mean squared error.

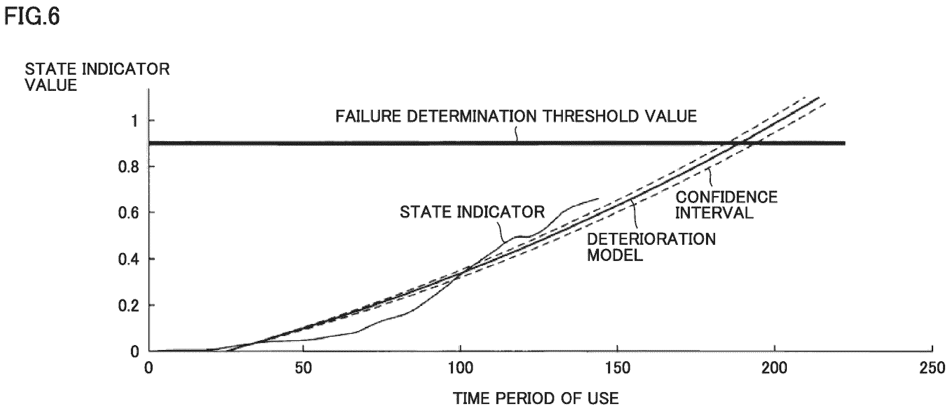

Fig. 6 is an illustrative diagram showing a deterioration model of ball screw 37 and a method of prediction of the lifetime thereof. The abscissa of a graph shown in Fig. 6 represents the time period of use of ball screw 37 and the ordinate represents the state indicator of ball screw 37. An irregularly incrementing line represents change over time of the state indicator. A smooth curve represents the deterioration model of ball screw 37 and dashed lines represent a confidence interval of the deterioration model. A bold line represents a failure determination threshold value. The failure determination threshold value is a value of the state indicator at the time of failure of ball screw 37.

By finding the time period of use at the time when the state indicator exceeds the failure determination threshold value with the use of the deterioration model, the lifetime of ball screw 37 can be predicted. The failure determination threshold value can experimentally be obtained with the use of flawed ball screw 37. The failure determination threshold value is stored in memory 142.

Control device 140 then predicts the lifetime of ball screw 37 with the deterioration model. For example, control device 140 can estimate a time point when the state indicator calculated with the deterioration model reaches the failure determination threshold value as timing of failure. Control device 140 is configured to determine timing to perform cleaning grease supply at appropriate time before the estimated timing of failure.

\<Control of Supply of Grease\>

Control of supply of grease will now be described. In the description of control of supply of grease below, Fig. 1 is also referred to as appropriate. Control device 140 has grease supplied to ball screw 37 in two manners of ordinary grease supply and cleaning grease supply.

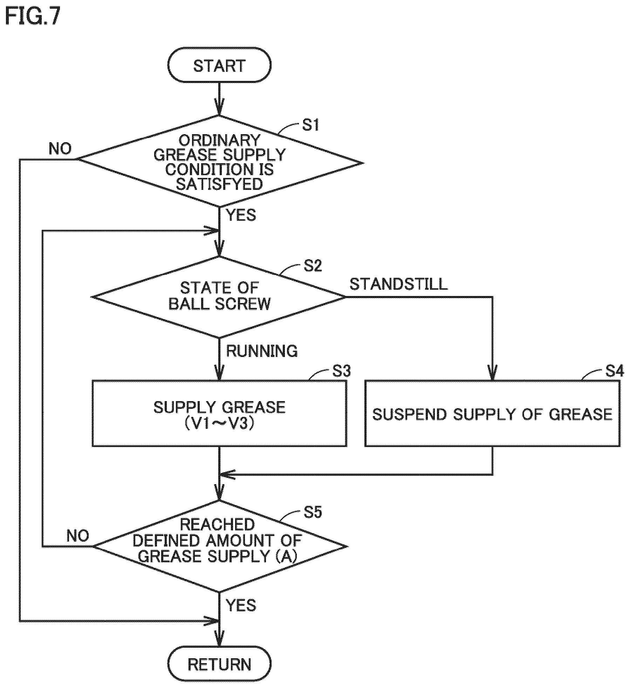

Fig. 7 is a flowchart for illustrating control of supply of grease in ordinary grease supply.

In step S1, control device 140 determines whether or not an ordinary grease supply condition has been satisfied. The ordinary grease supply condition includes, for example, lapse of a certain time period since previous ordinary grease supply, increase in total operating time period of the ball screw by a certain time period, and the like. When the ordinary grease supply condition has not been satisfied (NO in step S1), the process in this flowchart is no longer performed.

When the ordinary grease supply condition has been satisfied (YES in S1), in step S2, control device 140 checks the state of the ball screw. When the ball screw is running, in step S3, control device 140 has on-off valves V1 to V3 (see Fig. 3) shown in Fig. 3 opened and has pump 201 driven for supply of grease through the three injection ports. While the ball screw is in a standstill, on the other hand, in step S4, control device 140 stops pump 201 to suspend supply of grease.

Then in step S5, control device 140 determines whether or not the amount of supplied grease has reached a defined amount (A). When the amount of supplied grease has not reached the defined amount (NO in S5), the process returns to step S2 and grease is kept supplied. When the amount of supplied grease has reached the defined amount (A) (YES in S5), on the other hand, the process in this flowchart is no longer performed.

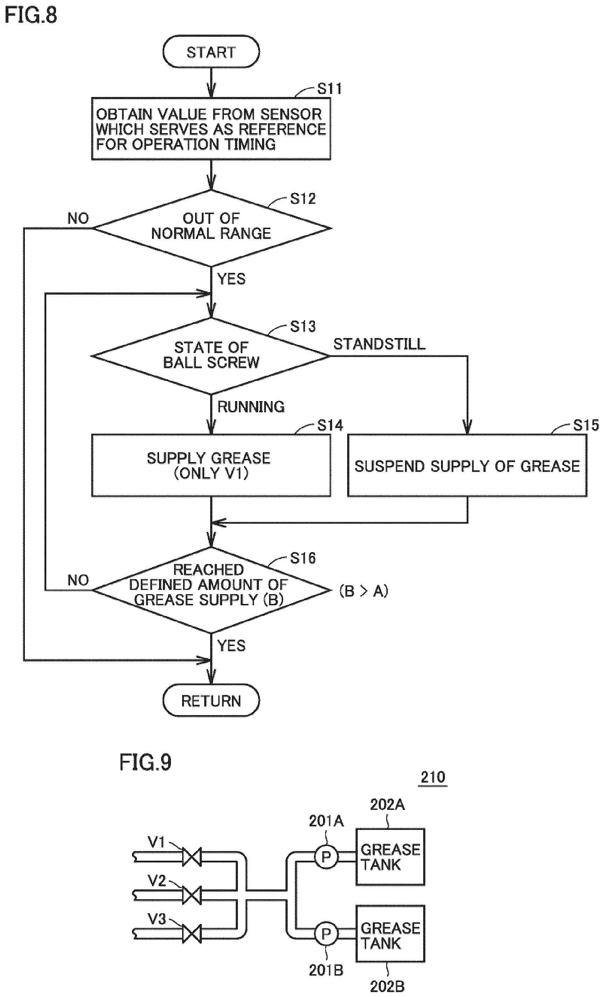

Fig. 8 is a flowchart for illustrating control of supply of grease in cleaning grease supply.

In step S11, control device 140 obtains a value from the sensor, which serves as the reference for operation timing. For example, in an example where sensor 160 shown in Fig. 3 is vibration sensor 50 in Fig. 2, the lifetime may be estimated by making two-step determination described with reference to Figs. 4 to 6, and decision to perform cleaning grease supply may be made based on reaching appropriate timing in view of the lifetime. Without being limited as such, sensor 160 shown in Fig. 3 may detect another physical value so long as the physical value indicates the state of ball screw 37. Control device 140 is configured to determine timing of cleaning grease supply based on output from sensor 160. Sensor 160 detects as the physical value, at least any one of vibration of screw shaft 39, torque of the servo motor that rotates screw shaft 39, the pressure of injection by the injection molding machine, and the concentration of iron particles in grease discharged from nut 38.

In succession in step S12, control device 140 determines whether or not the obtained value from the sensor is out of a normal range. When the value from the sensor is within the normal range (NO in S12), the process in this flowchart is no longer performed.

When the value from the sensor is out of the normal range (YES in S12), on the other hand, in step S13, control device 140 checks the state of the ball screw. While the ball screw is running, in step S14, control device 140 has only on-off valve V1 opened and has pump 201 driven for supply of grease through a single injection port. While the ball screw is in a standstill, on the other hand, in step S15, control device 140 stops pump 201 to suspend supply of grease.

Then in step S16, control device 140 determines whether or not the amount of supplied grease has reached a defined amount (B). Defined amount B in cleaning grease supply is larger than defined amount A in ordinary grease supply. When the amount of supplied grease has not reached the defined amount (B) (NO in S16), the process returns to step S13 and grease is kept supplied. When the amount of supplied grease has reached the defined amount (B) (YES in S16), on the other hand, the process in this flowchart is no longer performed.

As described above, in the present embodiment, during cleaning grease supply, grease in an amount larger than in ordinary grease supply is supplied through a single injection port to wash away iron particles and foreign matters. Since iron particles and foreign matters are automatically and timely removed, the lifetime of the ball screw can be extended without labor by a serviceperson.

[Second Embodiment]

An example in which grease in an amount larger than in ordinary grease supply is supplied during cleaning grease supply is described in the first embodiment. In this case, grease at a relatively low viscosity to be used in ordinary operations is used also in cleaning grease supply.

Use of the same grease is advantageous in that cleaning operations can be performed without interfering with ordinary machine operations. For cleaning grease supply, on the other hand, the type of grease may be changed. For example, ordinary operations are stopped, grease of a higher viscosity for cleaning is used, and the ball screw is moved.

By using high-viscosity grease, foreign matters can effectively be washed away. The high viscosity of grease, however, increases operation loads, and is not suitable for ordinary machine operations. Then, in a second embodiment, change to grease for ordinary operations is made before cleaning operations end, and grease inside the nut of the ball screw is replaced not to interfere with ordinary machine operations.

Fig. 9 is a diagram showing a configuration of a grease supply mechanism included in the second embodiment. A grease supply mechanism 210 shown in Fig. 9 includes grease tanks 202A and 202B where grease is stored, delivery pumps 201A and 201B that deliver grease, on-off valve V1 provided in a pipe through which injection port P1 is connected to delivery pumps 201A and 201B, on-off valve V2 provided in a pipe through which injection port P2 is connected to delivery pumps 201A and 201B, and on-off valve V3 provided in a pipe through which injection port P3 is connected to delivery pumps 201A and 201B.

Grease to be used in ordinary grease supply is stored in grease tank 202A. Grease to be used in cleaning grease supply, on the other hand, is stored in grease tank 202B. For example, grease higher in viscosity than grease in grease tank 202A is employed as grease in grease tank 202B.

In general, hardness of grease is expressed with "consistency". For example, grease of NLGI No. 1 (worked penetration from 310 to 340) can be employed as grease to be used in ordinary grease supply from grease tank 202A. Harder grease such as grease of NLGI No. 2 or 3 (worked penetration from 265 to 250) can be employed as grease to be used in cleaning grease supply from grease tank 202B. A method of measurement of consistency is defined, for example, under JIS-K2220.

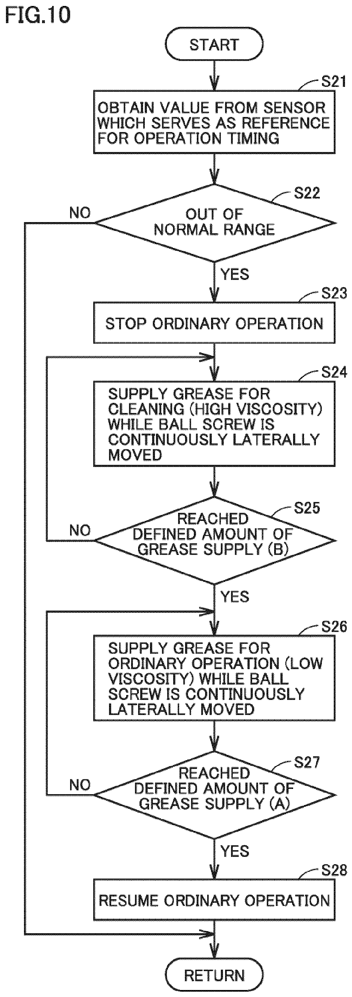

Fig. 10 is a flowchart for illustrating control of supply of grease in cleaning grease supply in the second embodiment.

In step S21, control device 140 obtains a value from the sensor, which serves as the reference for operation timing. In step S22, control device 140 determines whether or not the obtained value from the sensor is out of the normal range. Since processing in steps S21 and S22 is similar to the processing in steps S11 and S12 in Fig. 8, description will not be repeated.

When the value from the sensor is within the normal range (NO in S22), the process in this flowchart is no longer performed. When the value from the sensor is out of the normal range (YES in S22), on the other hand, in step S23, control device 140 stops ordinary operations of the ball screw.

Then in step S24, while the ball screw is continuously laterally moved, grease (of high viscosity) for cleaning is supplied. Though on-off valves V1 to V3 may be opened at this time, preferably, control device 140 has only on-off valve V1 opened and has pump 201B driven for supply of grease through a single injection port as in the first embodiment.

Then in step S25, control device 140 determines whether or not the amount of supplied grease has reached the defined amount (B). Defined amount B in cleaning grease supply is larger than defined amount A in ordinary grease supply. When the amount of supplied grease has not reached the defined amount (B) (NO in S25), the process returns to step S24 and grease is kept supplied. When the amount of supplied grease has reached the defined amount (B) (YES in S25), on the other hand, processing in step S26 or later is performed and grease for ordinary use is filled again.

In step S26, while the ball screw is continuously laterally moved, grease (of low viscosity) for ordinary operations is supplied. Though on-off valves V1 to V3 may be opened at this time, preferably, control device 140 has only on-off valve V1 opened and has pump 201A driven for supply of grease through a single injection port as in the first embodiment. Grease is thus quickly replaced.

Then in step S27, control device 140 determines whether or not the amount of supplied grease has reached the defined amount (A). When the amount of supplied grease has not reached the defined amount (A) (NO in S27), the process returns to step S26 and grease is kept supplied. When the amount of supplied grease has reached the defined amount (A) (YES in S27), on the other hand, ordinary operations are resumed in step S28.

According to the second embodiment, high-viscosity grease tends to wash away iron particles and foreign matters, and hence the state of the ball screw can be kept cleaner than in the first embodiment. Since grease for ordinary operations is filled again at the end of supply of grease for cleaning, the ordinary operations can be performed as they were performed before.

[Third Embodiment]

Reuse of grease which is consumed in large amount during cleaning will be described in a third embodiment.

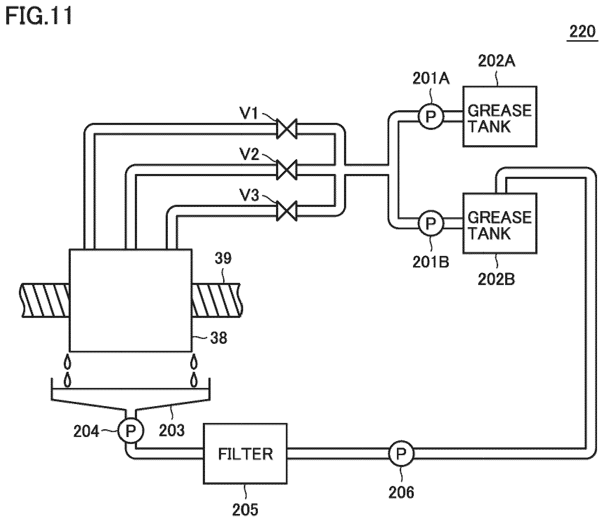

Fig. 11 is a diagram showing a configuration of a grease supply mechanism included in the third embodiment. As shown in Fig. 11, a grease supply mechanism 220 includes grease tank 202A, pump 201A, grease tank 202B, pump 201B, and on-off valves V1 to V3. Grease to be supplied in ordinary grease supply is stored in grease tank 202A. Pump 201A delivers grease in grease tank 202A. Grease to be supplied in cleaning grease supply is stored in grease tank 202B. Pump 201B delivers grease in grease tank 202B. On-off valves V1 to V3 allow selective supply of grease to the three injection ports provided in nut 38.

Grease supply mechanism 220 further includes an oil pan 203, a pump 204, a filter 205, and a pump 206. Grease discharged from nut 38 is stored in oil pan 203. Pump 204 sends grease in oil pan 203 to filter 205. Filter 205 removes foreign matters from grease discharged from nut 38. Pump 206 delivers grease that has passed through filter 205 to grease tank 202B.

Grease that has passed through filter 205 is reused for supply of grease to nut 38. Though new grease is preferably used in ordinary grease supply as in the configuration in Fig. 11, reused grease may be used also in ordinary grease supply, with grease tank 202A and pump 201A being removed.

According to the third embodiment, even when cleaning grease supply in which a large amount of grease is consumed is introduced, grease can be reused and hence an amount of replenishment with grease can be small.

Though an example in which the grease supply mechanism is introduced in ball screw 37 is shown in the embodiments above, a similar grease supply mechanism may be introduced in a ball screw in another portion, such as ball screw 119.

[Additional Aspects]

Illustrative embodiments described above are understood by a person skilled in the art as specific examples of aspects below.

(Clause 1) An injection molding machine in the present disclosure includes ball screw 37 including screw shaft 39, a ball, and nut 38, grease supply mechanism 200 that supplies grease to ball screw 37, and control device 140 that controls grease supply mechanism 200. Control device 140 is configured to have grease supply mechanism 200 perform ordinary grease supply in which a first amount of grease is supplied to nut 38 and cleaning grease supply in which a second amount of grease is supplied to nut 38, the second amount being larger than the first amount.

(Clause 2) Nut 38 in the injection molding machine described in Clause 1 includes at least first injection port P1 and second injection port P2 through which grease is injected. Control device 140 is configured to control grease supply mechanism 200 to inject grease through both of first injection port P1 and second injection port P2 during ordinary grease supply and to inject grease only through first injection port P1 during cleaning grease supply.

(Clause 3) In the injection molding machine described in Clause 2, distance D1 between central position C0 of nut 38 and first injection port P1 in a direction along a rotation axis of screw shaft 39 is shorter than distance D2 between central position C0 and second injection port P2.

(Clause 4) In the injection molding machine described in Clause 1, as shown in Fig. 9, grease supply mechanism 210 includes grease tank 202A where a first type of grease to be supplied in ordinary grease supply is stored and grease tank 202B where a second type of grease to be supplied in cleaning grease supply is stored. The second type of grease is higher in viscosity than the first type of grease.

(Clause 5) In the injection molding machine described in Clause 4, control device 140 is configured to control grease supply mechanism 210 such that, during cleaning grease supply, nut 38 is filled with the first type of grease after the second amount of the second type of grease is supplied.

(Clause 6) In the injection molding machine described in Clause 1, as shown in Fig. 11, grease supply mechanism 220 includes filter 205 that removes a foreign matter from grease discharged from nut 38. Grease that has passed through filter 205 is reused in grease supply to nut 38.

(Clause 7) In the injection molding machine described in Clause 6, as shown in Fig. 11, grease supply mechanism 220 further includes grease tank 202A where grease to be supplied in ordinary grease supply is stored and grease tank 202B where grease to be supplied in cleaning grease supply is stored. Grease that has passed through filter 205 is sent to grease tank 202B and reused in cleaning grease supply.

(Clause 8) As shown in Fig. 3, the injection molding machine described in any one of Clauses 1 to 7 further includes sensor 160 that detects a physical value indicating a state of ball screw 37. Control device 140 is configured to determine timing of cleaning grease supply based on output from sensor 160. Sensor 160 detects as the physical value, at least any one of vibration of screw shaft 39, torque of a servo motor that rotates screw shaft 39, a pressure of injection by the injection molding machine, and a concentration of iron particles in grease discharged from nut 38.

(Clause 9) In the injection molding machine described in any one of Clauses 1 to 7, control device 140 is configured to determine timing of cleaning grease supply based on a total distance of slide of screw shaft 39 held by nut 38 with respect to nut 38.

Though an example in which the grease supply mechanism is introduced in the injection molding machine is described in the present embodiment, the grease supply mechanism in the present disclosure may be applied to a ball screw of another industrial machine. Combination as appropriate of features described in the embodiments, including combination not mentioned herein, within the scope where inconvenience or inconsistency is not caused is originally intended in the embodiments and the modification described above.

It should be understood that the embodiments disclosed herein are illustrative and non-restrictive in every respect. The scope of the present invention is defined by the terms of the claims rather than the description above and is intended to include any modifications within the scope and meaning equivalent to the terms of the claims.

REFERENCE SIGNS LIST

27 fixed plate; 28 end plate; 30 movable plate; 31 guide bar; 33 hole; 35 rotational driveshaft; 37, 119 ball screw; 38 nut; 39 screw shaft; 40 ball; 41 first pulley; 42 second pulley; 43 linear guide; 47 reduction gear; 47A input shaft; 47B output shaft; 48 third pulley; 49 fourth pulley; 50 vibration sensor; 51 first bearing; 61 first timing belt; 62 second timing belt; 100 injection molding machine; 110 clamping apparatus; 111 bed; 112 fixed platen; 113 clamping housing; 114 movable platen; 115 tie bar; 116 clamping mechanism; 117, 118 mold; 120 injection apparatus; 121 base; 122 heating cylinder; 123 screw; 124 actuation apparatus; 125 hopper; 126 injection nozzle; 128 temperature sensor; 130 control panel; 132 display; 140 control device; 141 CPU; 142 memory; 143 servo amplifier; 151, 152 servo motor; 153 injection motor; 154 plasticization motor; 160 sensor; 200, 210, 220 grease supply mechanism; 201, 201A, 201B, 204, 206 pump; 202, 202A, 202B grease tank; 203 oil pan; 205 filter; P1 to P3 injection port; V1 to V3 on-off valve.

## Claims

1. An injection molding machine comprising:

   a ball screw including a screw shaft, a ball, and a nut;
   a grease supply mechanism that supplies grease to the ball screw; and
   a control device that controls the grease supply mechanism, wherein
   the control device is configured to have the grease supply mechanism perform ordinary grease supply in which a first amount of grease is supplied to the nut and cleaning grease supply in which a second amount of grease is supplied to the nut, the second amount being larger than the first amount.

2. The injection molding machine according to claim 1, wherein

   the nut includes at least a first injection port and a second injection port through which grease is injected, and
   the control device is configured to control the grease supply mechanism to inject grease through both of the first injection port and the second injection port during the ordinary grease supply and to inject grease only through the first injection port during the cleaning grease supply.

3. The injection molding machine according to claim 2, wherein
   a distance between a central position of the nut and the first injection port in a direction along a rotation axis of the screw shaft is shorter than a distance between the central position and the second injection port.

4. The injection molding machine according to claim 1, wherein

   the grease supply mechanism includes

   a first holding portion where a first type of grease to be supplied in the ordinary grease supply is stored, and
   a second holding portion where a second type of grease to be supplied in the cleaning grease supply is stored, and

   the second type of grease is higher in viscosity than the first type of grease.

5. The injection molding machine according to claim 4, wherein
   the control device is configured to control the grease supply mechanism such that, during the cleaning grease supply, the nut is filled with the first type of grease after the second amount of the second type of grease is supplied.

6. The injection molding machine according to claim 1, wherein

   the grease supply mechanism includes a filter that removes a foreign matter from grease discharged from the nut, and
   grease that has passed through the filter is reused in grease supply to the nut.

7. The injection molding machine according to claim 6, wherein

   the grease supply mechanism further includes

   a first holding portion where grease to be supplied in the ordinary grease supply is stored, and
   a second holding portion where grease to be supplied in the cleaning grease supply is stored, and

   grease that has passed through the filter is sent to the second holding portion and reused in the cleaning grease supply.

8. The injection molding machine according to any one of claims 1 to 7, further comprising a sensor that detects a physical value indicating a state of the ball screw, wherein

   the control device is configured to determine timing of the cleaning grease supply based on output from the sensor, and
   the sensor detects as the physical value, at least any one of vibration of the screw shaft, torque of a servo motor that rotates the screw shaft, a pressure of injection by the injection molding machine, and a concentration of iron particles in grease discharged from the nut.

9. The injection molding machine according to any one of claims 1 to 7, wherein
the control device is configured to determine timing of the cleaning grease supply based on a total distance of slide of the screw shaft held by the nut with respect to the nut.

FIG.1

**FIG.2**

**FIG.3**

FIG.4

FFT SIGNAL
INTENSITY

FREQUENCY

FIG.5

FFT SIGNAL
INTENSITY

FREQUENCY

FIG.6

STATE INDICATOR VALUE

FAILURE DETERMINATION THRESHOLD VALUE

STATE INDICATOR

CONFIDENCE INTERVAL

DETERIORATION MODEL

TIME PERIOD OF USE

EP 4 635 709 A1

FIG.7

```
                    ┌─────────────┐
                    │    START    │
                    └──────┬──────┘
                           │
                           ▼
                    ╱──────────────╲  ┌─ S1
              NO   ╱   ORDINARY     ╲
          ◄───────  GREASE SUPPLY    ─
                   ╲  CONDITION IS   ╱
                    ╲  SATISFYED    ╱
                     ╲─────┬───────╱
                           │ YES
                           ▼
                    ╱──────────────╲  ┌─ S2
                   ╱    STATE OF     ╲      STANDSTILL
                  ─   BALL SCREW      ──────────────────┐
                   ╲                 ╱                   │
                    ╲─────┬─────────╱                    │
                          │ RUNNING                      │
                          ▼                              ▼
              ┌────────────────────┐ ┌─ S3   ┌────────────────────────┐ ┌─ S4
              │   SUPPLY GREASE     │        │ SUSPEND SUPPLY OF GREASE│
              │     (V1~V3)         │        │                        │
              └──────────┬─────────┘         └───────────┬────────────┘
                         │                               │
                         ▼◄──────────────────────────────┘
                    ╱──────────────╲  ┌─ S5
              NO   ╱    REACHED      ╲
          ◄───────  DEFINED AMOUNT OF ─
                   ╲ GREASE SUPPLY (A)╱
                    ╲─────┬──────────╱
                          │ YES
                          ▼
                    ┌─────────────┐
                    │   RETURN    │
                    └─────────────┘
```

15

**FIG.8**

```
                    ┌─────────┐
                    │  START  │
                    └─────────┘
                         │
                         ▼              S11
        ┌──────────────────────────────────┐
        │ OBTAIN VALUE FROM SENSOR         │
        │ WHICH SERVES AS REFERENCE        │
        │ FOR OPERATION TIMING             │
        └──────────────────────────────────┘
                         │
                         ▼              S12
    NO              ◇ OUT OF ◇
    ◄───────────────  NORMAL RANGE
                         │
                        YES
                         │
                         ▼              S13
              ◇ STATE OF ◇───────── STANDSTILL
                BALL SCREW                    │
                         │                    │
                      RUNNING                 │
                         ▼   S14              ▼   S15
        ┌──────────────────────┐   ┌──────────────────────────┐
        │  SUPPLY GREASE       │   │ SUSPEND SUPPLY OF GREASE │
        │  (ONLY V1)           │   │                          │
        └──────────────────────┘   └──────────────────────────┘
                         │                    │
                         ▼◄───────────────────┘
                                        S16
    NO         ◇ REACHED ◇
    ◄──────────  DEFINED AMOUNT OF     (B > A)
               GREASE SUPPLY (B) ◇
                         │
                        YES
                         ▼
                    ┌─────────┐
                    │ RETURN  │
                    └─────────┘
```

**FIG.9**

210

FIG.10

```
                    ┌─────────────┐
                    │    START    │
                    └──────┬──────┘
                           │           ⌐S21
            ┌──────────────▼──────────────┐
            │ OBTAIN VALUE FROM SENSOR    │
            │ WHICH SERVES AS REFERENCE   │
            │ FOR OPERATION TIMING        │
            └──────────────┬──────────────┘
                           │           ⌐S22
     NO              ◇─────▼─────◇
    ◄────────────────   OUT OF
                       NORMAL RANGE
                        ◇─────┬─────◇
                              │ YES
                              │           ⌐S23
                    ┌─────────▼─────────┐
                    │ STOP ORDINARY     │
                    │ OPERATION         │
                    └─────────┬─────────┘
                              │           ⌐S24
            ┌─────────────────▼─────────────────┐
            │ SUPPLY GREASE FOR                 │
            │ CLEANING (HIGH VISCOSITY)         │
            │ WHILE BALL SCREW IS               │
            │ CONTINUOUSLY LATERALLY            │
            │ MOVED                             │
            └─────────────────┬─────────────────┘
                              │           ⌐S25
     NO           ◇───────────▼───────────◇
    ◄─────────────     REACHED
                   DEFINED AMOUNT OF
                   GREASE SUPPLY (B)
                   ◇───────────┬───────────◇
                               │ YES
                               │           ⌐S26
            ┌──────────────────▼──────────────────┐
            │ SUPPLY GREASE FOR                   │
            │ ORDINARY OPERATION (LOW             │
            │ VISCOSITY) WHILE BALL               │
            │ SCREW IS CONTINUOUSLY               │
            │ LATERALLY MOVED                     │
            └──────────────────┬──────────────────┘
                               │           ⌐S27
     NO            ◇───────────▼───────────◇
    ◄──────────────    REACHED
                   DEFINED AMOUNT OF
                   GREASE SUPPLY (A)
                   ◇───────────┬───────────◇
                               │ YES
                               │           ⌐S28
            ┌──────────────────▼──────────────────┐
            │ RESUME ORDINARY OPERATION           │
            └──────────────────┬──────────────────┘
                               │
                    ┌──────────▼──────────┐
                    │      RETURN         │
                    └─────────────────────┘
```

FIG.11

# INTERNATIONAL SEARCH REPORT

International application No.

**PCT/JP2023/040165**

### A. CLASSIFICATION OF SUBJECT MATTER

***B29C 45/17***(2006.01)i; ***B29C 45/76***(2006.01)i

FI: B29C45/76; B29C45/17

According to International Patent Classification (IPC) or to both national classification and IPC

### B. FIELDS SEARCHED

Minimum documentation searched (classification system followed by classification symbols)

B29C45/17; B29C45/76

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2011-148286 A (FANUC LTD) 04 August 2011 (2011-08-04) paragraphs [0002], [0030]-[0039], [0049], fig. 4-5 | 1, 8 |
| A | entire text | 2-7, 9 |
| A | JP 2006-7479 A (TOYO MACH & METAL CO LTD) 12 January 2006 (2006-01-12) entire text | 1-9 |
| A | JP 2003-340900 A (TOYO MACH & METAL CO LTD) 02 December 2003 (2003-12-02) entire text | 1-9 |

☐ Further documents are listed in the continuation of Box C.     ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **20 December 2023** | **09 January 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2023/040165**

| Patent document cited in search report | | | Publication date (day/month/year) | Patent family member(s) | | | Publication date (day/month/year) |
|---|---|---|---|---|---|---|---|
| JP | 2011-148286 | A | 04 August 2011 | US paragraphs [0004], [0058]-[0078], fig. 4-5 CN | 2011/0159132 102107508 | A1 A | |
| JP | 2006-7479 | A | 12 January 2006 | (Family: none) | | | |
| JP | 2003-340900 | A | 02 December 2003 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021074917 A